# EUROPEAN PATENT SPECIFICATION

(11) **EP 2 092 631 B1**
(45) Date of publication and mention of the grant of the patent: **06.09.2017**
(21) Application number: 07875148.4
(22) Date of filing: 06.12.2007
(51) Int. Cl.: H02M 7/00

(54) **REMOVABLE COMPONENT CARTRIDGE FOR INCREASING RELIABILITY IN POWER HARVESTING SYSTEMS**
KARTUSCHE MIT ABNEHMBAREN KOMPONENTEN ZUR ERHÖHUNG DER ZUVERLÄSSIGKEIT ELEKTRISCHER ERNTESYSTEME
CARTOUCHE AMOVIBLE DE COMPOSANTS POUR AUGMENTER LA FIABILITÉ DANS DES SYSTÈMES DE RECUEIL DE PUISSANCE

(30) Priority: 06.12.2006 US 868851 P; 06.12.2006 US 868893 P; 07.12.2006 US 868962 P; 26.03.2007 US 908095 P; 09.05.2007 US 916815 P; 04.12.2007 US 950224; 04.12.2007 US 950271; 04.12.2007 US 950307
(43) Date of publication of application: 26.08.2009
(73) Proprietor: SOLAREDGE TECHNOLOGIES LTD, 45240 Hasharon (IL)
(72) Inventor: SELLA, GUY, Bitan Aharon (IL); ADEST, MEIR, Raanana (IL); GALIN, YOAV, Raanana (IL); HANDELSMAN, LIOR, Givataim (IL); FISHELOV, AMIR, Tel Aviv (IL)
(74) Representative: Puschmann Borchert Bardehle Patentanwälte Partnerschaft mbB
(86) International application number: PCT/IB2007/004643
(87) International publication number: WO 2009/007782

(56) References cited:
- EP-A- 1 531 545
- WO-A-93/13587
- WO-A-96/13093
- WO-A-03/050938
- US-A1- 2005 068 820
- KNAUPP W ET AL: "Operation of a 10 kW PV facade with 100 W AC photovoltaic modules" 19960513; 19960513 - 19960517, 13 May 1996 (1996-05-13), pages 1235-1238, XP010208376

## Description

The general field of the invention relates generally to power electronics and more particularly to improving reliability and maintainability of DC-AC inverters, and even more particularly to increasing reliability and maintainability in the inverters used in solar array applications.

Distributed power harvesting systems include series connections of many DC power sources or parallel connections of many AC power sources or modules to accumulate the power from each source. Batteries with numerous cells or hybrid vehicles with multiple fuel cells are examples of DC power sources whose power is accumulated through a series connection. Maintaining reliability in such connections is important because malfunction of one component in a series connection may disturb the operation of the entire installation. Solar energy is an example of a technology that is based on distributed power harvesting from DC power sources.

Photovoltaic (PV) cells forming solar arrays provide a clean alternative source of energy. Solar installations include PV panels that convert the light energy to electric power and electronic power harvesting systems that harvest the electric power from the panels and convert it for domestic use. In a typical domestic installation, the power will ultimately be inverted to AC so it could be used by electrical devices or fed into the grid.

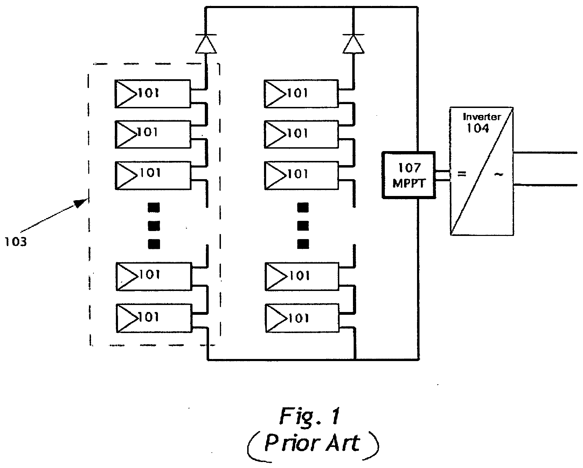

A conventional centralized system for distributed power harvesting, is shown in Figure 1. In the centralized installation, depicted in Figure 1, DC power sources, such as PV panels 101, are connected in series to form a string of panels 103. For a large installation, several strings 103 may be connected in parallel. The PV panels are mounted out-doors, and their leads are connected to a maximum power point tracking (MPPT) circuit 107 and then to an inverter circuit 104. MPPT 107 and inverter 104 circuits may be elements of a single product and housed in the same inverter box.

Various environmental and operational conditions impact the power output of DC power sources. For example, the solar energy incident on various panels, ambient temperature and other factors impact the power extracted from each panel. Depending on the number and type of panels used, the extracted power may vary widely in the voltage and current. The MPPT circuit 107 tracks the maximum power point where the current extracted from the PV panels provides the maximum average power such that if more current is extracted, the average voltage from the panels starts to drop, thus lowering the harvested power. The MPPT circuit 107 maintains a current that yields the maximum average power from the series connected panels 101 or the parallel connection of the strings 103. [0007] The harvested power is then delivered to the inverter 104, which converts the fluctuating direct-current (DC) into alternating-current (AC) having a desired voltage and frequency which is usually 1 10V@60Hz or 220V@50Hz. The AC current from the inverter 104 may then be used for operating electric appliances or fed back to the power grid. Alternatively, if the installation is not tied-to the grid, the power extracted from the inverter may be directed to a conversion and charge/discharge circuit which charges batteries. The batteries could store any excess power created until it is needed.

The centralized system shown in Figure 1 has a number of limitations and drawbacks, which adversely affect its ability to harvest all of the potential power, and may limit the functional lifetime of the installation. The limitations of the centralized system include low tolerance to panel aging and panel malfunction. Further, large variations in the voltage entering the inverter causes components in the inverter to be more susceptible to degradation, thus lowering their useful lifetime. It is interesting to note that although PV panels may have warranties in excess of 20 years, warranties on inverters are usually only 5 years.

Most conventional solar arrays fail in 5 to 10 years due to the failure of their inverters or their MPPT stages. The inverters and MPPT circuits fail due to high voltage or current that they have to withstand.

When an inverter malfunctions, a technician must come and replace the faulty inverter. The inverters include capacitors that over time either malfunction or their functional parameters change over time due to stress or aging. The inverter often malfunctions because of problems in the on-board capacitors. However, when an inverter fails, it is not possible to easily determine whether the failure is caused by the capacitor. Rather, a technician must be sent to the premises to replace the inverter, even if there is a single capacitor at fault. One reason is that the replacement of capacitors requires disassembly of the inverter and either soldering out the faulty component or replacing the entire circuit. These operations are done in a lab and not at the premises. Further, because once malfunction occurs the whole inverter is to be replaced, it is not cost-effective to perform preventative maintenance. As a result, when malfunction occurs, the end user will have to experience power outage. Additionally, because the whole inverter is replaced instead of only one faulty component, the cost of the repair, in terms of both parts and labor, is high.

Regardless of the particular installation topology, in practice inverters generally fail and need to be replaced several times over the life of a solar system. These failures require dispatching of a professional technician to diagnose the problem and replace the inverter when needed. Often the failure is traced to the capacitors, which fail due to prolonged service under stress. These capacitors are rated for high capacitance on the order of, for example, 100 µF - 20 mF for the inverter input capacitor and several µF for the output capacitor (e.g., 1-IOµ F). At times, failure of the capacitor may cause a short circuit, which may cause further irreparable damage to the inverter, or possibly other elements of the system. Therefore, any improvement in the reliability and/or ease of service of the inverter would greatly benefit the overall service of the solar system. Also, any improvement enabling preventive maintenance would be of great benefit for solar systems and, in fact, for other electrical systems utilizing inverters.

WO 93/13587 A discloses an ac drive controller including a phase assembly for each phase of a polyphase supply to a motor, each phase assembly including an invertor module and a corresponding filter module. The electrical interconnections between each filter module and each invertor module occur through electrically conductive clips and corresponding bus bars to which the electronic switching devices in the invertor are also connected. The filter and invertor module interconnections are located as close as possible to the points where the electronic switching devices are connected to the buses to minimize stray reactances while allowing for simplified assembly and servicing of the controller.

In US 2005/068820 A1, a bus system is disclosed for use with switching devices, such as power electronic devices. The system includes generally parallel bus elements that define electrical reference planes, such as for a dc bus. The bus elements are separated from one another by insulative layers, with additional insulative layers being available for separating the system from other circuit components. Portions of the bus elements are extended or exposed to permit connection to the circuit elements, including packaged switching circuits and energy storage or filtering circuits. The bus system may be conformed to a variety of geometric configurations, and substantially reduces parasitic inductance and total loop inductance in the resulting circuitry.

WO 03/050938 A relates to a power inverter for converting a direct current into an alternating current. The aim of the invention is to provide a power inverter which can be repaired in its place of use in a faster and more reliable manner. To this end, the inventive power inverter has an at least partially modular structure consisting of detachably integrated modules and connection lines which are detachably applied to said modules.

EP-1 531 545 A provides a technique and a product in which a frequency converter supplying electric power to, for example, a motor, a downsizing, lightening or the like is realized while providing a filter apparatus reducing electromagnetic noises and the like. The filter apparatus reducing electromagnetic noises and the like is provided near a main circuit terminal board of the frequency converter, and the filter apparatus is connected directly to a main circuit terminal as a wiring drawing portion of the frequency converter. Part of a housing of the frequency converter and part of a filter housing are fitted to each other to fix the filter housing to the frequency converter.

According to WO 96/13093 A1, an inverter device is provided the height of which is sufficiently reduced and, therefore, the size of which can be easily reduced even when large-sized electrolytic capacitors for a main circuit are used. This inverter device has holder sections holding electrolytic capacitors for a main circuit which are fitted to both sides of a spacer member. The capacitors are connected to the DC terminals of a power supply terminal block through wires. Since the electrolytic capacitors are not housed in the inverter's main body, the height of the main body can be reduced by the height of the capacitors.

Accordingly, there is a need for increasing serviceability and preventive maintenance of the components used in inverters. The improvement is particularly needed in solar systems, but could also be utilized in other application requiring a reliable DC-AC inverter.

The following summary of the invention is provided in order to provide a basic understanding of some aspects and features of the invention. This summary is not an extensive overview of the invention, and as such it is not intended to particularly identify key or critical elements of the invention, or to delineate the scope of the invention. Its sole purpose is to present some concepts of the invention in a simplified form as a prelude to the more detailed description that is presented below.

For the above purpose, the invention provides an inverter according to claim 1, a removable cartridge according to claim 1, an electrical circuit being a part of an inverter according to claim 4, a power harvesting system according claim 5, and a method of maintaining an inverter according to claim 15. Preferred embodiments of the invention are characterized in the sub-claims.

According to aspects of the invention, a novel approach is proposed that drastically simplifies diagnosis and repair of DC-AC inverters, even by casual users. Moreover, the novel approach introduces means for preventive maintenance that cannot be performed in conventional inverters. Consequently, the service of the overall system is enhanced.

The accompanying drawings, which are incorporated in and constitute a part of this specification, exemplify the embodiments of the present invention and, together with the description, serve to explain and illustrate principles of the invention.

The drawings are intended to illustrate major features of the exemplary embodiments in a diagrammatic manner. The drawings are not intended to depict every feature of actual embodiments nor relative dimensions of the depicted elements, and are not drawn to scale.
Figure 1 illustrates a conventional system for distributed power harvesting.
Figure 2 shows a distributed power harvesting system according to aspects of the invention.
Figure 3 is a simplified schematic drawing of an inverter.
Figure 4 shows a capacitor cartridge, and its connection to an inverter circuit according to aspects of the invention.
Figure 5 illustrates a cartridge according to an embodiment of the invention.
Figure 6 illustrates an electrical board with a cartridge according to an example of the prior art.
Figure 7 illustrate an inverter according to an embodiment of the invention.
Figure 8 illustrates another inverter according to an embodiment of the invention.

### DETAILED DESCRIPTION

Aspects of the present invention provide replaceable reliability cartridges to be used in power harvesting systems. The reliability cartridge isolates any components prone to malfunction on a user removable part. Because the faults usually occur in the capacitors, the capacitor components would be prime candidates for the replaceable reliability cartridge. However, the reliability cartridge may include other components as well, such as active elements, e.g., FET (field effect transistor) and/or IGBT (isolated gate bipolar transistor).

This practice provides numerous benefits. For example, by replacing cartridges one at a time, one may easily check whether any particular component has failed. This can be done by a user, without calling a service technician. Moreover, once a certain component has been determined to be faulty, only the faulty component can be replaced. The replacement could be done by anyone and there is no need for a technician or any tools, such as a solder. Further, preventative maintenance is made possible such that the owner could be sent a replacement cartridge before failure. For example, replacing the cartridge every few months or every few years, much like replacing water filter or air filter, prevents failure of the overall device. Since failure of the component is prevented, it can avoid damage to other components which may be caused by a malfunctioning component.

Distributed power harvesting systems, according to embodiments of the present invention, provide a system for combining power from multiple direct-current electrical power sources. The power sources are each connected as inputs to an associated electrical power converter. Each electrical power converter converts input power to output power by monitoring and controlling the input power at a maximum power level. Outputs of the electrical power converters are connected into a series-connected direct-current output. An inverter may be used to invert the series-connected direct-current output into an alternating-current output. The inverter controls voltage of the series-connected direct-current output at a previously-determined voltage by varying the amount of current drawn from the series-connected direct-current output.

Alternatively, each converter may be coupled to an associated inverter to form an AC module. The AC modules may be parallel connected to accumulate power.

For each electrical power converter, substantially all the input power is converted to the output power, and the controlling is performed by fixing the input current or voltage to the maximum power point and allowing output voltage to vary. In each converter, a controller may perform the controlling by adjusting duty cycle using pulse width modulation (or any of numerous other methods such as PFM [pulse frequency modulation]) transferring power from the input to the output. The direct-current electrical power sources may be solar cells, solar panels, electrical fuel cells, electrical batteries, and the like. For each power source, one or more sensors perform the monitoring of the input power level.

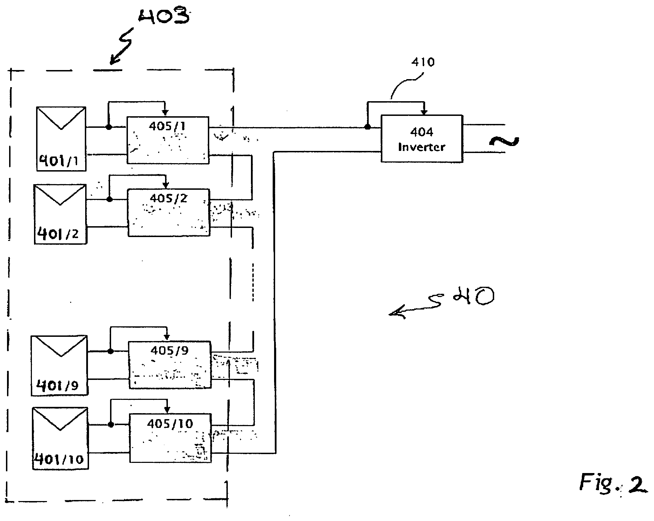

Figure 2 illustrates a distributed power harvesting and conversion configuration 40, according to an embodiment of the present invention. Configuration 40 enables connection of multiple power sources, for example solar panels 401 to a single power supply. The series connection of all of the solar panels is connected to an inverter 404.

In configuration 40, each solar panel 401 is connected to a separate power converter circuit 405. Power converter circuit 405 adapts optimally to the power characteristics of the connected solar panel 401 and transfers the power efficiently from input to output. Power converters 405 can be buck converters, boost converters, buck/boost converters, flyback or forward converters. The converters 405 may also contain a number of component converters, for example a cascade of buck and boost converters.

Each converter 405 includes a control loop that receives a feedback signal, not from the output current or voltage, but rather from the input coming from the solar panel 401. An example of such a control loop is a maximum power point tracking (MPPT) loop in solar array applications. The MPPT loop in the converter locks the input voltage and current from each solar panel 401 to its optimal power point. The MPPT loop of the converter 405 operates to perform maximum power point tracking and transfers the input power to its output without imposing a controlled output voltage or output current.

Converters 405 can be connected in series or in parallel to form strings and arrays.

Conventional DC-to-DC converters have a wide input voltage range at the solar panel side and an output voltage predetermined and fixed on installation. In these conventional DC-to-DC voltage converters, the controller monitors the current or voltage at the input, and the voltage at the output. The controller determines the appropriate pulse width modulation (PWM) duty cycle to fix the output voltage to the predetermined value increasing the duty cycle if the output voltage drops while varying the current extracted from the input. In converters 405, according to embodiments of the present invention, the controller monitors the voltage and current at its input and determines the PWM in such a way that maximum power is extracted, dynamically tracking the maximum power point. In embodiments of the present invention, the feedback loop is closed on the input power in order to track maximum power rather than closing the feedback loop on the output voltage as performed by conventional DC-to-DC voltage converters.

The outputs of converters 405 are series connected into a single DC output into the inverter 404 which converts the series connected DC output to an alternating current power supply.

The circuit of Figure 2 provides maximum power available during continuous operation from each solar panel 401 by continuously performing MPPT on the output of each solar panel to react to variations in temperature, solar radiance, shading or other performance deterioration factors of each individual solar panel 401. As shown in Figure 1, conventional prior art solutions for combining power, perform MPPT on strings 103 or arrays of solar panels 101. As a result of having a separate MPPT circuit in each converter 405, and for each solar panel 401, in the embodiments of the present invention, each string 403 in the embodiment shown in Figure 2 may have a different number of panels 401 connected in series. Furthermore panels 401 can be installed in different directions, as solar panels 401 do not have to be matched and partial shading degrades the performance of only the shaded panel. According to embodiments of the present invention, the MPPT circuit within the converter 405 harvests the maximum possible power from panel 401 and transfers this power as output regardless of the parameters of other solar panels 401.

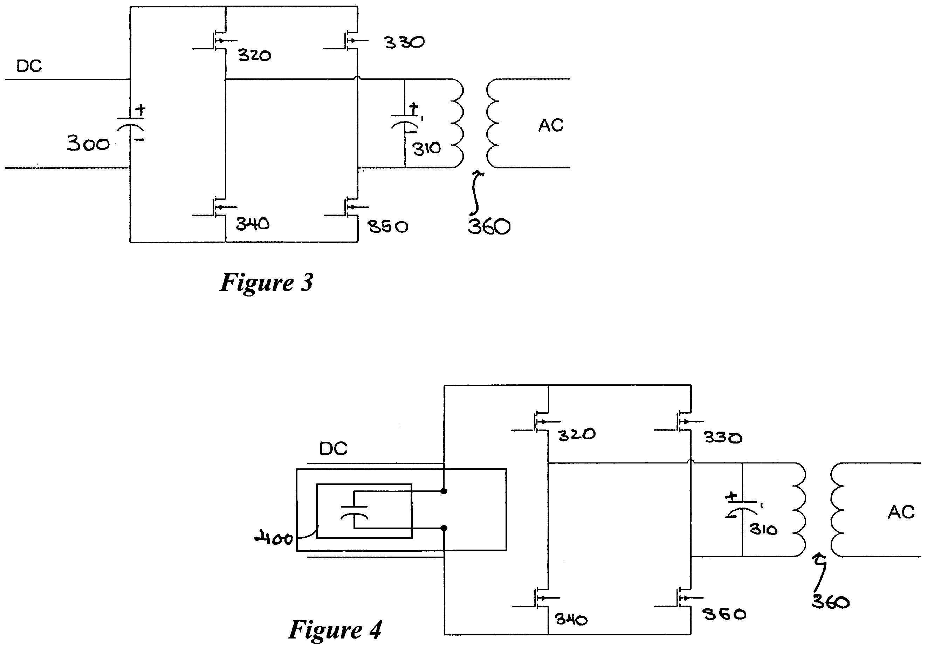

Figure 3 is a simplified schematic drawing of an inverter. An inverter converts the DC electricity from sources such as batteries, solar panels, or fuel cells to AC electricity. The inverter shown in Figure 3 includes capacitors 300, 310, switches 320, 330, 340, and 350, and a transformer 360. The transformer 360 is optional and is used for voltage boost, isolation or both.

The topology shown in Figure 3 is an H-bridge topology. A positive plate of capacitor 300 is coupled to a positive plate of the capacitor 310 through the switch 320. A negative plate of capacitor 300 is coupled to a negative plate of capacitor 310 through the switch 350. Further, the switch 330 is coupled between the positive plate of 300 and the negative plate of 310 and the switch 340 is coupled between the negative plate of 300 and the positive plate of 310. In this topology, when the switches 320 and 350 are on, a positive current is provided from the positive plate of 300 to the positive plate of 310. When the switches 330 and 340 are on, a negative current is provided from the capacitor 300 to the capacitor 310. By alternating the switching, an alternating current reaches the transformer 360.

Antiparallel diodes, not shown, may be connected across each semiconductor switch 320, 330, 340, 350 to provide a path for the peak inductive load current when the semiconductor is turned off.

The capacitor 300 is an input capacitor and is used on a DC side of the inverter for storing and filtering the incoming energy. Capacitor 300 is generally rated at 100 µF - 20mF. The capacitor 310 is used on the AC side of the inverter for storing energy that is passed onto the AC side through the transformer 360. Capacitor 310 is generally rated at several µF, e.g., 1-10µF.

In one implementation, each of the capacitors 300, 310 may include several capacitors connected together in parallel to obtain a larger capacitance value. In one implementation, the switches may be FET or insulated-gate bipolar transistors (IGBTs). The IGBT is a three-terminal power semiconductor device that is noted for high efficiency. It is designed to rapidly turn on and off.

The inverter shown in Figure 3 is exemplary and any other inverter circuit having capacitors, inductors, and switches including various types of switching transistors may be used to achieve the function of inverting a DC input to an AC output.

Figure 4 shows a capacitor cartridge, and its connection to an inverter circuit according to aspects of the invention. In Figure 4, the inverter circuit of Figure 3 is shown with the addition of a reliability cartridge 400. The reliability cartridge 400 is shown as including the DC input capacitor 300 or the parallel connection of a group of capacitors that form the DC input capacitor 300. However, a reliability cartridge may be used for any other element of the exemplary inverter shown in Figure 3 or elements of a different type of inverter.

The reliability cartridge 300 is removable and may be replaced with another cartridge containing an equivalent element. Replacement may be performed as routine maintenance or upon failure of the element contained in the reliability cartridge. Optionally, the controller is programmed to perform performance check of certain components, such has the capacitors, and provide reports or alarms when it is determined that a component functions below its required performance characteristics. The controller may also be programmed to include a counter that provides an indication of expiry of service life of components. The counter may be reset each time a component is replaced. The reliability cartridge 300, or any other reliability cartridge, is used to isolate any elements prone to malfunction on a removable part. As a result, only faulty components are replaced upon failure. Further, replacement of the reliability cartridge is simple and could be performed by an unskilled user. Preventative maintenance is made possible because the owner could be sent a replacement cartridge before failure or replace the component when the controller provides indication that the component performs below requirement or that a service life has expired.

Because the faults and failures usually occur in the capacitors, the reliability cartridge 400 is shown as including a capacitor. However, other components could be included in a similar cartridge. Alternatively, other components, such as switching devices, e.g., FET, IGBT, etc., may be housed in their own removable cartridges.

In the exemplary embodiment shown in Figure 4, only the input capacitor 300 is included in the reliability cartridge 400 and may be replaced. However, when the same capacitance is used for both the input capacitor 300 and the output capacitor 310, the same cartridge 400 may be used to replace either.

In order to more easily utilize the reliability cartridge 400 and similar cartridges, the inverter circuit may be designed so that all of the components with increased failure chance and limited useful lifetime are assembled off board and enclosed in a separate, user-replaceable cartridge.

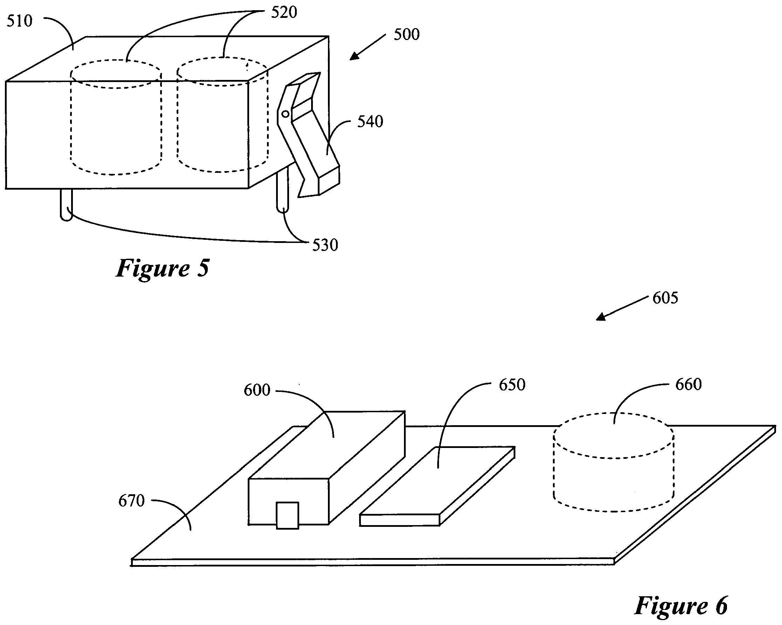

Figure 5 illustrates a cartridge according to an embodiment of the invention. In Figure 5, cartridge 500 basically comprises a housing 510, in which one or more capacitors 520 or other components may be housed. If more than one capacitor is housed inside the housing, the capacitors may be interconnected inside the housing to provide increased capacitance. The housing has connection leads 530, which electrically connects the capacitors to the remainder of the circuit. Optionally, mechanical clamp 540 may be provided to physically secure the cartridge 500 to the electrical board.

Figure 6 illustrates an electrical board with a cartridge according to an example of the prior art. In Figure 6 the inverter circuit 605 is constructed on an electrical board, such as a conventional PCB 670. The switches and any other elements landing themselves for implementation in an ASIC or other type of integrated circuit are shown collectively as IC 650. The inductor 660, when used, may also be connected to the PCB, or be on a separate compartment. Therefore, the inductor 660 is shown in broken lines. The capacitors are connected to the PCB 670 using the cartridge 600 according to an example of the prior art. The cartridge 600 is removable from the PCB 670.

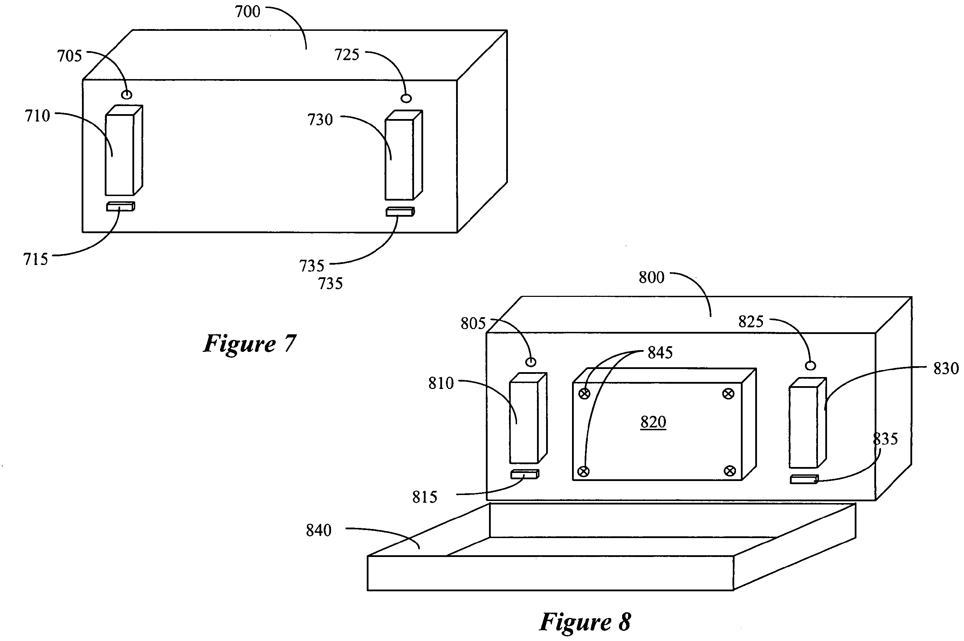

Figure 7 illustrate an inverter according to an embodiment of the invention. In the embodiment of Figure 7 the inverter comprises a sealed or sealable box 700. The replaceable component cartridges 710 730 are connected to the exterior of the box, so that the user may replace the cartridges without having to open the box 700. The cartridges may be removed by simply pulling on the cartridge to separate the cartridge from the electrical sockets (not shown) it is connected to. Optionally, as shown in the embodiments of Figures 5 and 6, mechanical clamping may be provided to physically secure the cartridge to the inverter housing 700.

The arrangement illustrated in Figure 7 provide a safety measure to enable easy replacement of components by non-trained persons without the risk of electrocution. It also ensures that non-trained persons do not have access to the other circuitry of the inverter so as not to damage the inverter. Another benefit is that the supplier of the inverter can monitor tempering with the inverter for warranty and other purposes.

In the example of Figure 7, two cartridges 710, 730, are shown, each having an indicator light 705, 725, that provides an indication of whether the cartridge should be replaced. For example, the controller may perform performance check on the component (e.g. capacitance or leakage current of capacitors) or may include a timer that measures the life of the component. Also, optional reset buttons 715, 735, are provided. Whenever a cartridge is replaced, the respective reset button may be depressed, to thereby indicate to the controller that the cartridge has been replaced. For example, when a timer is used to measure the components service life, the reset button may restart the counter upon replacement of a cartridge. Alternatively, each cartridge may have a unique ID or other means of identification so that when it is replaced, the inverter control circuit can be automatically aware of the replacement and function accordingly.

Figure 8 illustrates another inverter according to an embodiment of the invention. The embodiment of Figure 8 is similar to that of Figure 7, except that in Figure 8 a cover 740 is provided so that the housing 800 encloses the entire inverter, including the removable cartridges. When the cover 840 is removed, the cartridges are exposed for replacement; however, the circuitry remains sealed within box 820. Box 820 may be opened by, for example, removing simple or temper proof bolts 845, or other such means. However, the cartridges may be replaced by a user without the need for any tools or soldering.

While the reliability cartridge may be used to contain different components and may be used with different parts of the power harvesting circuit, using this cartridge in the inverter circuit provides ease of operation. Because, in a PV power harvesting system, each panel has a power-converting circuit, the voltage entering the inverter is substantially constant and does not fluctuate as function of the luminance and aging of the panel. Therefore, a more robust inversion circuit may be designed, which allows for a large gamut of component values to be used. The inverter is substantially insensitive to the exact values of the components used and is much more tolerant to drift in the values, which is common as components age. This robustness directly leads to tolerance to problems that may emerge and longer average lifetime of the system.

In one aspect, when an inverter has lenient ripple requirements at the DC entrance of the inverter, and by using advanced digital power conversion techniques, the use of electrolytic capacitors in the panel modules may be eliminated, thus greatly extending the life of the modules.

Application specific integrated circuits (ASICs) tend to be less susceptible to manufacturing flaws. Because the probability of manufacture related failures is proportional to the number of components used, the integration of the complex functions of several components into one ASIC component reduces the chance of failure. In one aspect of the invention, several components of the inverter circuit or other circuits used in the system of Figure 2 may be implemented using ASICs. In that case, reliability cartridges including each ASIC may be used that are easily replaceable.

Accordingly, by using various implementations of the various aspects of the present invention, there is a high probability that simple replacement of the cartridge will repair a fault thus lowering both labor and part costs of the repair. Moreover, there is no need to send an experienced technician to fix the problem and a lay person could perform the repair by himself in a manner similar to replacing and ink cartridge in an inkjet printer. And finally, it is easy and cost-effective to send new cartridges to customers on a regular basis so they could preemptively replace the old cartridge with the new one, thus significantly lowering the risk of malfunction and eliminating the nuisance involved in suffering from power outages.

The present invention has been described in relation to particular examples, which are intended in all respects to be illustrative rather than restrictive. Those skilled in the art will appreciate that many different combinations of hardware, software, and firmware will be suitable for practicing the present invention. Moreover, other implementations of the invention will be apparent to those skilled in the art from consideration of the specification and practice of the invention disclosed herein. It is intended that the specification and examples be considered as exemplary only, with a true scope being indicated by the following claims and their equivalents.

## Claims

1. A removable cartridge (500, 710, 730, 810, 830) for use with an electrical circuit enclosed in a housing (700, 800), wherein the electrical circuit is part of an inverter coupled to a power source providing DC power, and wherein the housing (700, 800) of said electrical circuit has on its exterior electrical sockets for electrical connection to the electrical circuit, the removable cartridge (500, 600, 710, 730, 810, 830) comprising:
a cartridge housing,
at least one capacitor (520) or active element inside said cartridge housing of said removable cartridge (500, 710, 730, 810, 830), said removable cartridge (500, 710, 730, 810, 830) being **characterized in that** it further comprises
electrical pin connectors adapted for electrical connection to the one capacitor (520) or active element inside said cartridge housing of the removable cartridge (500, 710, 730, 810, 830), and further adapted for plugging said cartridge (500, 710, 730, 810, 830) into the electrical sockets provided on the exterior of the housing (700, 800) of the electrical circuit.

2. The removable cartridge of claim 1, wherein the active element is an application specific integrated circuit (ASIC).

3. The removable cartridge of claim 1, further comprising a mechanical clamp provided on the exterior of the cartridge housing of the removable cartridge (500, 710, 730, 810, 830).

4. An electrical circuit being a part of an inverter coupled to a power source providing DC power, said electrical circuit for use with a removable cartridge (500, 710, 730, 810, 830) having a cartridge housing at least one capacitor or active element inside said cartridge housing of the removable cartridge (500, 710, 730, 810, 830) and electrical pin connectors for electrical connection to the one capacitor (520) or active element inside said cartridge housing of said removable cartridge (500, 710, 730, 810, 830), said electrical circuit comprising:
a housing (700, 800) to prevent risk of electrocution, said electrical circuit being **characterized in that** it further comprises
electrical sockets on the exterior of said housing (700, 800) of said electrical circuit adapted for electrical connection to the electrical circuit inside said housing (700, 800) of said electrical circuit and further adapted for receiving the electrical pin connectors of the removable cartridge (500, 710, 730, 810,830).

5. A power harvesting system comprising:
a power source providing DC power; and
an inverter including a removable cartage according to claim 1 and an electrical circuit according to claim 4, wherein
the inverter is coupled to the power source and is configured to receive and invert the DC power into AC current.

6. The power harvesting system of claim 5, wherein the inverter further comprises a plurality of switching transistors.

7. The power harvesting system of claim 5, wherein the power source comprises a DC-DC converter, the converter comprising the removable cartridge (500, 710, 730, 810, 830).

8. The power harvesting system of claim 7, wherein the removable cartridge (500, 710, 730, 810,830) is a user replaceable cartridge.

9. The power harvesting system of claim 5, wherein the removable component cartridge (500, 710, 730, 810, 830) houses at least one capacitor, wherein the capacitor preferably is rated at 1µF - 20mF.

10. The power harvesting system of claim 5, wherein the inverter further comprises a controller providing an indication when the removable cartridge (500, 710, 730, 810, 830) should be replaced.

11. The power harvesting system of claim 10, wherein the controller determines to provide the indication by testing the parameters of the electrical component (520) within the removable cartridge (500, 710, 730 810, 830) or by timing service life of the electrical component (520) within the removable cartridge (500, 710, 730 , 810, 830).

12. The power harvesting system of claim 11, wherein the inverter further comprises a reset button providing an indication to the controller when a removable cartridge (500, 710, 730 ,810, 830) has been replaced.

13. The power harvesting system of claim 5, wherein the inverter further comprises an inverter housing (800) and a cover (840) which when removed exposes only the removable cartridge (810, 830) for replacement.

14. The power harvesting system of claim 5, wherein the removable cartridge (500, 710, 730 ,810, 830) comprises a mechanical clamp affixing the removable cartridge (500) to housing of the electrical circuit.

15. A method of maintaining an inverter comprising a removable cartridge as claimed in claim 1 and an electrical circuit as claimed in claim 4, the method comprising:
isolating the capacitor or active element of the inverter prone to malfunction on the removable cartridge (500, 710, 730 ,810, 830):
replacing the capacitor or active element prone to malfunction by pulling said removable cartridge (500, 710, 730, 810, 830) from the electrical sockets it is connected to and by plugging into said electrical sockets a new removable cartridge (500, 710, 730, 810, 830) when a controller in the inverter provides a report that the capacitor or active element performs below its required performance characteristics.

## Patentansprüche

1. Abnehmbare Kartusche (500, 710, 730, 810, 830) zur Verwendung mit einer elektrischen Schaltung, die in einem Gehäuse (700, 800) eingeschlossen ist, wobei die elektrische Schaltung Teil eines Inverters ist, der an eine Gleichstrom liefernde Stromquelle gekoppelt ist, und wobei das Gehäuse (700,800) der elektrischen Schaltung an seiner Außenseite elektrische Buchsen zur elektrischen Verbindung mit der elektrischen Schaltung aufweist, wobei die abnehmbare Kartusche umfasst:
ein Gehäuse,
wenigstens einen Kondensator (520) oder ein aktives Element in dem Gehäuse der abnehmbaren Kartusche (500, 710, 730, 810, 830), wobei die abnehmbare Kartusche (500, 710, 730, 810, 830) **dadurch gekennzeichnet ist, dass** sie weiterhin umfasst:
elektrische Stift-Verbinder, die zur elektrischen Verbindung mit dem einen Kondensator (520) oder dem aktiven Element in dem Gehäuse der abnehmbaren Kartusche (500, 710, 730, 810, 830), geeignet ist und des Weiteren geeignet ist, um die Kartusche (500, 710, 730, 810, 830) in die elektrischen Buchsen einzustecken, die auf der Außenseite des Gehäuses (700,800) der elektrischen Schaltung vorgesehen sind.

2. Abnehmbare Kartusche nach Anspruch 1, wobei das aktive Element eine anwendungsspezifische, integrierte Schaltung (ASIC) ist.

3. Abnehmbare Kartusche nach Anspruch 1, ferner umfassend eine mechanische Klemme, die auf der Außenseite des Gehäuses der abnehmbaren Kartusche (500, 710, 730, 810, 830) vorgesehen ist.

4. Elektrische Schaltung, die ein Teil eines Inverters ist, der an eine einen Gleichstrom liefernde Stromquelle angekoppelt ist, wobei die elektrische Schaltung zur Verwendung mit einer abnehmbaren Kartusche (500, 710, 730, 810, 830), die ein Kartuschen-Gehäuse, wenigstens einen Kondensator oder ein aktives Element in dem Kartuschen-Gehäuse der abnehmbaren Kartusche (500,710, 730, 810, 830) und elektrische Stift-Verbinder zur elektrischen Verbindung mit dem einen Kondensator (520) oder dem aktiven Element in dem Gehäuse der abnehmbaren Kartusche (500, 710, 730, 810, 830) hat, wobei die elektrische Schaltung umfasst:
ein Gehäuse (700, 800), um ein Risiko eines tödlichen elektrischen Schlags zu vermeiden, wobei die elektrische Schaltung **dadurch gekennzeichnet ist, dass** sie ferner umfasst:
elektrische Buchsen auf der Außenseite des Gehäuses (700, 800), die zur elektrischen Verbindung mit der elektrischen Schaltung in dem Gehäuse (700,800) geeignet ist und die weiterhin geeignet ist, um die elektrischen Stift-Verbinder der abnehmbaren Kartusche (500, 110, 730, 810, 830) aufzunehmen.

5. Stromernte-System umfassend:
eine Stromquelle, die einen Gleichstrom liefert, und
einen Inverter, der eine Kartusche nach Anspruch 1 und eine elektrische Schaltung nach Anspruch 4 umfasst, wobei
der Inverter mit der Stromquelle gekoppelt ist und konfiguriert ist, den Gleichstrom zu empfangen und in einen Wechselstrom zu invertieren.

6. Stromernte-System nach Anspruch 5, wobei der Inverter ferner eine Vielzahl von SchaltTransistoren umfasst.

7. Stromernte-System nach Anspruch 5, wobei die Stromquelle einen Gleichstrom-Gleichstrom-Wandler umfasst, wobei deren Wandler eine austauschbare Komponenten-Kartusche (500, 710, 730, 810, 830) umfasst.

8. Stromernte-System nach Anspruch 7, wobei die abnehmbare Komponenten-Kartusche (500, 710, 730, 810, 830) eine von einem Benutzer austauschbare Kartusche (500, 710, 730, 810, 830) ist.

9. Stromernte-System nach Anspruch 5, wobei die abnehmbare Komponenten-Kartusche (500, 710, 730, 810, 830) wenigstens einen Kondensator enthält, wobei der Kondensator vorzugsweise auf 1µF - 20mF ausgelegt ist.

10. Stromernte-System nach Anspruch 5, wobei der Inverter weiterhin einen Controller umfasst, der eine Anzeige liefert, wenn die abnehmbare Kartusche (500, 710, 730, 810, 830) ersetzt werden sollte.

11. Stromernte-System nach Anspruch 10, wobei der Controller entscheidet, die Anzeige zu liefern, indem die Parameter der elektrischen Komponente (520) in der abnehmbaren Kartusche (500, 710, 730, 810, 830) getestet werden oder indem die Zeit für eine Service-Lebensdauer der elektrischen Komponenten (520) in der abnehmbaren Kartusche (500, 710, 730, 810 830) zeitlich gesteuert wird.

12. Stromernte-System nach Anspruch 11, wobei der Inverter ferner einen Rücksetz-Schaltknopf umfasst, der eine Anzeige an den Controller liefert, wenn die abnehmbare Kartusche (500, 710, 730, 810, 830) ersetzt worden ist.

13. Stromernte-System nach Anspruch 5, wobei der inverter ferner ein Gehäuse (800) und einen Deckel (840) umfasst, der, wenn er entfernt wird, nur die abnehmbare Kartusche (810, 830) zum Austausch freilegt.

14. Stromernte-System nach Anspruch 5, wobei die abnehmbare Kartusche (500, 710, 730, 810, 830) eine mechanische Klemme umfasst, die die abnehmbare Kartusche (500) an der elektrischen Schaltung fixiert.

15. Verfahren zur Wartung eines Inverters, der eine abnehmbare Kartusche nach Anspruch 1 und eine elektrische Schaltung nach Anspruch 4 umfasst, wobei das Verfahren umfasst:
isolieren des Kondensators oder des aktiven Elements des Inverters, bei dem eine Fehlfunktion droht, auf der abnehmbaren Kartusche (500, 710, 730, 810, 830):
Ersetzen des Kondensators oder des aktiven Elements, bei dem eine Fehlfunktion droht, durch Abziehen der abnehmbaren Kartusche (500, 710, 730, 810, 830) von den elektrischen Buchsen, an denen sie angeschlossen ist, und durch Einstecken einer neuen abnehmbaren Kartusche (500, 710, 730, 810, 830) in die elektrischen Buchsen, wenn ein Controller in dem Inverter einen Bericht liefert, dass der Kondensator oder das aktive Element unter seiner Soll-Performance-Charakteristik arbeitet.

## Revendications

1. Cartouche amovible (500, 710, 810, 830) destinée à être utilisée avec un circuit électrique contenu dans un boîtier (700, 800), dans laquelle le circuit électrique fait partie d'un inverseur relié à une source d'énergie qui fournit une énergie CC, et dans laquelle le boîtier (700, 800) dudit circuit électrique possède, sur son extérieur, des prises électriques destinées au raccordement électrique au circuit électrique, la cartouche amovible (500, 710, 730, 810, 830) comprenant :
un boîtier de cartouche,
au moins un condensateur (520) ou un élément actif à l'intérieur dudit boîtier de cartouche de ladite cartouche amovible (500, 710, 730, 810, 830), ladite cartouche amovible (500, 710, 730, 810,830) étant **caractérisée en ce qu'**elle comprend en outre
des connecteurs à broches électriques adaptés pour être reliés électriquement au condensateur (520) ou à l'élément actif à l'intérieur dudit boîtier de cartouche de la cartouche amovible (500, 10, 730, 810, 830), et adapté en outre pour brancher ladite cartouche (500, 710, 730, 810, 830) sur les prises électriques prévues sur l'extérieur du boîtier (700, 800) du circuit électrique.

2. Cartouche amovible selon la revendication 1, dans laquelle l'élément actif est un circuit intégré propre à une application (ASIC).

3. Cartouche amovible selon la revendication 1, qui comprend en outre une fixation mécanique prévue sur l'extérieur du boîtier de cartouche de la cartouche amovible (500, 710, 730, 810, 830).

4. Circuit électrique qui fait partie d'un inverseur relié à une source d'énergie qui fournit une énergie CC, ledit circuit électrique étant destiné à être utilisé avec une cartouche amovible (500,710, 730, 810, 830) qui possède une cartouche qui contient au moins un condensateur ou un élément actif à l'intérieur dudit boîtier de cartouche de la cartouche amovible (500, 710, 730, 810, 830) et des connecteurs à broches électriques destinés au raccordement électrique au condensateur (520) ou à l'élément actif à l'intérieur dudit boîtier de cartouche de ladite cartouche amovible (500, 710, 730, 810, 830), ledit circuit électrique comprenant :
un boîtier (700, 800) destiné à empêcher tout risque d'électrocution, ledit circuit électrique étant **caractérisé en ce qu'**il comprend en outre
des prises électriques sur l'extérieur dudit boîtier (700, 800) dudit circuit électrique, adaptées pour le raccordement électrique au circuit électrique à l'intérieur dudit boîtier (700, 800) dudit circuit électrique, et adaptées pour recevoir les connecteurs à broches électriques de la cartouche amovible (500,710, 730, 810, 830).

5. Système de collecte d'énergie qui comprend :
une source d'énergie qui fournit une énergie CC ; et
un inverseur qui comprend une cartouche amovible selon la revendication 1 et un circuit électrique selon la revendication 4, dans lequel
l'inverseur est relié à la source d'énergie et est configuré pour recevoir et inverser l'énergie CC en courant CA.

6. Système de collecte d'énergie selon la revendication 5, dans lequel l'inverseur comprend en outre une pluralité de transistors de commutation.

7. Système de collecte d'énergie selon la revendication 5, dans lequel la source d'énergie comprend un convertisseur CC-CC, le convertisseur comprenant la cartouche amovible (500, 710, 730, 810, 830).

8. Système de collecte d'énergie selon la revendication 7, dans lequel la cartouche amovible (500, 710, 730, 810, 830) est une cartouche remplaçable par l'utilisateur.

9. Système de collecte d'énergie selon la revendication 5, dans lequel la cartouche amovible de composant (500, 710, 730, 810,830) contient au moins un condensateur, dans lequel le condensateur est de préférence calibré à 1 µf-20 mF.

10. Système de collecte d'énergie selon la revendication 5, dans lequel l'inverseur comprend en outre un régulateur qui fournit une indication lorsque la cartouche amovible (500, 710, 730, 810,830) doit être remplacée.

11. Système de collecte d'énergie selon la revendication 10, dans lequel le régulateur détermine que l'indication doit être fournie en testant les paramètres du composant électrique (520) dans la cartouche amovible (500, 710, 730, 810, 830) ou en décomptant la durée de vie du composant électrique (520) dans la cartouche amovible (500, 710, 730, 810, 830).

12. Système de collecte d'énergie selon la revendication 11, dans lequel l'inverseur comprend en outre un bouton de réinitialisation qui fournit une indication au régulateur lorsqu'une cartouche amovible (500, 710, 730, 810, 830) a été remplacée.

13. Système de collecte d'énergie selon la revendication 5, dans lequel l'inverseur comprend en outre un boîtier d'inverseur (800) et un capot (840) qui, lorsqu'il est retiré, expose uniquement la cartouche amovible (810, 830) à remplacer.

14. Système de collecte d'énergie selon la revendication 5, dans lequel la cartouche amovible (500,710, 730, 810, 830) comprend une fixation mécanique qui fixe la cartouche amovible (500) sur le boîtier du circuit électrique.

15. Procédé d'entretien d'un inverseur qui comprend une cartouche amovible selon la revendication 1 et un circuit électrique selon la revendication 4, le procédé comprenant :
l'isolation du condensateur ou de l'élément actif de l'inverseur qui a tendance à être défaillant sur la cartouche amovible (500, 710, 730, 810, 830) ;
le remplacement du condensateur ou de l'élément actif qui a tendance à être défaillant en sortant ladite cartouche amovible (500,710, 730,810,830) des prises électriques auxquelles il est relié, et en branchant sur lesdites prises électriques une nouvelle cartouche amovible (500, 710, 730, 810, 830) lorsqu'un régulateur de l'inverseur indique que les performances du condensateur ou de l'élément actif sont inférieures à celles requises.
